Europäisches Patentamt

(19) European Patent Office

Office européen des brevets

(11) **EP 0 426 017 B1**

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(51) Int. Cl.[6]: **C08F 210/00**, C08F 2/38

(21) Anmeldenummer: **90120533.6**

(22) Anmeldetag: **26.10.1990**

(54) **Verfahren zur Herstellung von alternierenden Copolymeren aus Acrylnitril und Olefinen**

Process for the manufacture of alternate copolymers of acrylonitrile and olefins

Procédé de préparation de copolymères alternatifs de nitrile acrylique et d'oléfines

(84) Benannte Vertragsstaaten:
**DE FR GB IT**

(30) Priorität: **28.10.1989 DE 3935978**

(43) Veröffentlichungstag der Anmeldung:
**08.05.1991 Patentblatt 1991/19**

(73) Patentinhaber: **HOECHST AKTIENGESELLSCHAFT
D-65926 Frankfurt am Main (DE)**

(72) Erfinder:
- **Eisenbach, Claus D., Dr.
  W-8580 Bayreuth (DE)**
- **Bülow, Ulrich, Dr.
  W-8263 Burghausen (DE)**
- **Lieberth, Wolfgang
  W-8580 Bayreuth (DE)**
- **Fischer, Hartmut, Dr.
  W-6238 Hofheim am Taunus (DE)**

(56) Entgegenhaltungen:
EP-A- 0 153 809        DE-A- 1 949 370
US-A- 3 655 629        US-A- 3 846 383
US-A- 4 058 509        US-A- 4 433 122

- **CHEMICAL ABSTRACTS, Band 90, Nr. 16, April 1979, Seite 3, Zusammenfassung Nr. 122121u, Columbus, Ohio, US; V.B. MIKHANT'EV et al.: "Radical copolymerization of 1-n-propoxy-2-allyloxy-2-methyl-3-butene with acrylonitrile", & DEPOSITED DOC. 1977, VINITI 1523-77, 8 PP.**

**Beschreibung**

Die Erfindung betrifft ein Verfahren zur Herstellung von alternierenden Copolymeren aus Acrylnitril und Olefinen in Gegenwart von Komplexierungsmitteln.

Die Herstellung von alternierenden Copolymeren durch Polymerisation von $\alpha$-Olefinen wie Ethylen (ET), Propylen (PR), Isopren mit ungesättigten polaren Verbindungen wie Acryl- und Methacrylsäure, deren Ester, des Acrylnitrils (AN) oder Methacrylnitrils in Gegenwart eines Katalysatorsystems aus einer metallorganischen Halogenverbindung oder einer metallorganischen Verbindung, letztere unter Zusatz eines Metallhalogenids und einer Verbindung eines Übergangsmetalls der Gruppen IVa, Va, VIa oder VIII des Periodischen Systems, die mindestens ein Halogenatom, einen Alkoxy-, $\beta$-Diketo- oder Acyloxyrest enthält, ist bekannt (DE-AS 19 49 370).

Ein besonders bevorzugtes Katalysatorsystem enthält danach Alkylaluminiumhalogenide oder Alkylborhalogenide in Kombination mit einer Vanadin- oder Kobaltverbindung. Die Funktion dieser Metallverbindungen besteht darin, daß sie aufgrund ihrer Lewis-Säure-Funktion sehr fest an die basischen Zentren der polaren Monomeren, also die Ester- oder Nitrilgruppen der Acrylmonomeren, gebunden werden und deren Struktur dahingehend verändern, daß streng alternierende Copolymere aufgebaut werden. Aus dieser Funktion ergibt sich aber, daß diese Hilfsstoffe auch nach der Copolymerisation an die basischen Zentren gebunden bleiben; die Bindungsfestigkeit ist im fertigen Copolymer sogar höher als im Monomerkomplex.

Diese Tatsache ist ein entscheidender Nachteil der alternierenden Copolymerisation durch Komplexierung, der im Prinzip des Verfahrens liegt und als solcher naturgemäß nicht zu umgehen ist. Besonders gravierend fällt diese systembedingte Schwierigkeit jedoch ins Gewicht, wenn mit Aluminium- oder Boralkylen (oder anderen hydrolyseempfindlichen Metallverbindungen) komplexiert wird, weil bei der solvolytischen Ablösung des Komplexierungsmittels aus dem primär entstandenen Copolymer-Metallverbindungs-Komplex das Komplexierungsmittels völlig zerstört wird. Dabei geht nicht nur die teure metallorganische Verbindung verloren, sondern bei der Hydrolyse (oder Alkoholyse) entstehen häufig Produkte, die die Aufarbeitung und Reinisolierung des Copolymeren stark beeinträchtigen. Es sei hier nur beispielhaft angeführt, daß die Hydrolyse z.B. von $R_XAlCl_{3-X}$, $AlCl_3$, $R_XTiCl_{4-X}$, $TiCl_4$, $R_XSnCl_{4-X}$, $SnCl_4$ zur Bildung unlöslicher Oxidhydrate führt, die vom Copolymeren nur durch mehrfaches Umfällen abgetrennt werden können, während der gleichzeitig freigesetzte Chlorwasserstoff Korrosion verursachen kann und jedenfalls lästiger Abfall ist.

Für eine technisch mögliche und wirtschaftlich interessante Anwendung der komplexierten Copolymerisation ist es unbedingt notwendig, den totalen Verlust des Komplexierungsmittels zu vermeiden.

Die Aufgabe der vorliegenden Erfindung ist ein Verfahren zu finden, das es gestattet, ungesättigte polare Verbindungen mit Olefinen alternierend zu copolymerisieren und das Komplexierungsmittel aus dem primär gebildeten Copolymer-Metallverbindung-Komplex in einfacher Weise und in wiederverwendbarer Form zurückzugewinnen.

Eine weitere Aufgabe der vorliegenden Erfindung ist es, ein Verfahren zur Verfügung zu stellen, bei dem die Reaktionspartner in den einzelnen Verfahrensstufen weitgehend unempfindlich sind gegenüber Feuchtigkeit und anderen Verunreinigungen des Reaktionssystems.

Es wurde gefunden, daß diese Aufgabe überraschenderweise gelöst werden kann durch ein Verfahren zur Herstellung von alternierenden Copolymeren durch radikalische Copolymerisation von Acrylnitril mit Olefinen, dadurch gekennzeichnet, daß die Copolymerisation in Gegenwart von einem Zinksalz als Komplexierungsmittel in einem organischen Lösungsmittel durchgeführt wird und das Einbauverhältnis von Acrylnitril zu Olefin im Bereich 1:1 bis 2,5:1 liegt. Die Copolymerisation wird in organischen Lösungsmitteln bei Drucken bis zu ca. 100 bar und bei einer Temperatur von -78°C bis +100°C unter Verwendung radikalischer Initiatoren durchgeführt. Die Verfahrensweise der Copolymerisation ist gegenüber Wasser oder anderen Verunreinigungen des Reaktionssystems wesentlich unempfindlicher als bei Verwendung von Aluminiumorganylen.

Bei diesem Verfahren kann das komplexierte Acrylnitril in guter Ausbeute alternierend mit Olefinen copolymerisiert werden, wobei sich das Komplexierungsmittel nach der Copolymerisation aus dem Fällungsmedium wieder leicht zurückgewinnen läßt.

Das Reaktionsprodukt besteht aus einem Gemisch des streng alternierend aufgebauten Copolymerisats aus AN und Olefin, sowie aus einem AN-reicheren Copolymeren. Das alternierende Copolymere läßt sich daraus durch Extraktion mit Lösungsmitteln wie Trichlormethan oder Aceton leicht abtrennen.

Als Olefine sind zu nennen: 1-n-Alkene und 1-iso-Alkene mit jeweils 4 - 6 C-Atomen, Diene wie Butadien und Isopren, Cycloalkene wie Cyclopenten, Styrol und kernsubstituierte Derivate, $\alpha$-Methylstyrol und deren substituierte Derivate, dabei bevorzugt sind 1-Buten, Isobuten und 1-iso-Pentene, besonders bevorzugt aber Ethylen und Propylen.

Als Komplexierungsmittel werden Zinksalze eingesetzt, z.B. Nitrate, vorzugsweise Halogenide, z.B. Zinkchlorid. Solche Halogenide sind starke Komplexbildner, die 1 oder 2 Mol Acrylnitril fest binden können. Zinkchlorid kann als solches oder bevorzugt in Form des Komplexes aus Zinkchlorid und Diethylether ($Et_2O$) verwendet werden. Der $ZnCl_2 \cdot Et_2O$-Komplex ist kommerziell erhältlich.

Die Zinkhalogenide und Acrylnitrile bilden stabile Komplexe, die sich isolieren lassen und bevorzugt als solche bei der Copolymerisation eingesetzt werden können. Derartige Komplexe sind z.B. $ZnCl_2 \cdot AN$, $ZnCl_2 \cdot 2\,AN$, $ZnCl_2 \cdot Et_2O/AN$.

Die Herstellung eines ZnCl$_2$·2AN-Komplexes aus Zinkchlorid erfordert ein langwieriges Verfahren. Dagegen kann man unter Verwendung von ZnCl$_2$·Et$_2$O den reaktiven Komplex durch einfache Zugabe von AN erhalten.

Das molare Verhältnis von Komplexierungsmittel zu AN kann 0,5 bis 6 Mol pro Mol AN betragen. Um einen hohen Alternierungsgrad zu erreichen, werden bevorzugt 2 bis 6 Mol pro Mol AN im Copolymerisationsgemisch eingesetzt.

Der Einsatz der Komplexbildner bewirkt zum einen eine deutliche Erhöhung der Ausbeute, zum anderen wird das molare Einbauverhältnis von AN/Olefin derart beeinflußt, daß im Idealfall streng alternierende Copolymere entstehen. In jedem Fall liegt das Einbauverhältnis im Bereich von 1:1 bis 2,5:1, vorzugsweise 1:1 bis 1,5:1. Es unterscheidet sich daher deutlich von den Copolymeren, die ohne Komplexierungsmittel erhalten werden.

Die Polymerisation wird im allgemeinen in einem organischen Lösungsmittel durchgeführt z.B. aliphatischen oder aromatischen Kohlenwasserstoffen, die halogeniert sein können, wie Chloroform, Tetrachlorkohlenstoff, 1,1,1-Trichlorethan, Chlorbenzol, o-Dichlorbenzol und Toluol. Wird auf homogene Reaktionsführung Wert gelegt, so darf das Lösungsmittel nicht zu unpolar sein. Alkane scheiden aus. Bevorzugte Lösungsmittel sind Dichlormethan und 1,2-Dichlorethan. In Dichlormethan löst sich der ZnCl$_2$·2AN-Komplex besonders gut.

Bei der Copolymerisation beträgt das molare Verhältnis von Olefinen (OL) zu Acrylnitril (AN) (in freier oder komplexierter Form) im Ansatz OL:AN = 0,5:1 bis 10:1, vorzugsweise OL:AN = 2:1 bis 5:1. Wenn das Olefin Styrol ist, liegt das Verhältnis OL:AN = 0,5:1 bis 1:1.

Die Copolymerisation wird bei einer Temperatur von -78°C bis +100°C, bevorzugt 30°C bis 80°C und insbesondere 40 bis 70°C durchgeführt. Der bei der Copolymerisation auftretende Druck liegt im allgemeinen bei 1 bis ca. 20 bar. Bei Verwendung von Styrol kann drucklos gearbeitet werden, mit Ethylen kann jedoch ein Druck bis 100 bar auftreten.

Die Copolymerisation wird im allgemeinen in einem Druckreaktor, der mit Heiz- bzw. Kühlmantel und Rührer ausgerüstet ist, durchgeführt. Dabei wird der Initiator und der im verwendeten Lösungsmittel gelöste AN-Komplex bei ca. 20°C im Druckgefäß vorgelegt und anschließend dieses Gemisch gegebenenfalls auf eine Temperatur abgesenkt, welche deutlich unter dem Siedepunkt des verwendeten Olefincomonomeren liegt.

Anschließend wird die gewünschte Menge Olefin (Flüssiggas) zugegeben oder einkondensiert. Das Reaktionsgefäß wird dann verschlossen und auf die gewünschte Reaktionstemperatur erwärmt. Die Reaktionsdauer beträgt im allgemeinen 0,5 bis 15 Stunden, jedoch werden bereits in 1 bis 3 Stunden gute Ergebnisse erzielt.

Die Komponenten können auch in geänderter Reihenfolge in den Reaktor eingebracht werden, wobei zuerst das Olefin mit dem Lösungsmittel vorgelegt und dann über eine geeignete Dosiervorrichtung die Lösung des AN-Komplexes mit dem Initiator zugegeben wird.

Die zur Auslösung der Copolymerisation eingesetzten radikalischen Initiatoren sind Perester, z.B. t-Amylperneodekanoat (TAPND), Dialkylperoxide, z.B. Di-t-butyl-peroxid, Hydroperoxide, z.B. t-Butylhydroperoxid. Bevorzugte Initiatoren sind Dibenzoylperoxid (BPO) und Cyclohexylperoxicarbonat (CHPC).

Bei niedrigen Copolymerisationstemperaturen von -78°C bis 0°C kann die Polymerisation auch mit ZnEt$_2$ und Sauerstoff (Luftsauerstoff) gestartet werden.

## Herstellung des ZnCl$_2$·2AN-Komplexes

Zinkchlorid wird unter Schutzgasatmosphäre eingewogen und unter vermindertem Druck bei ca. 300-400°C etwa 15 Minuten in der Schmelze getrocknet. Nach Abkühlung wird ein etwa 2 bis 3-facher Überschuß an AN hinzugegeben und der Ansatz unter Rühren so lange erwärmt, bis sich alles ZnCl$_2$ restlos gelöst hat. Man entfernt das überschüssige AN, bis sich ein opaker Festkörper bildet. Mittels Auswägen wird die Zusammensetzung festgestellt und dann gegebenenfalls die Verdampfung des AN fortgesetzt.

ZnCl$_2$·2AN ist ein weißlicher Festkörper, der zwischen 30 und 35°C schmilzt und sich gut in CH$_2$Cl$_2$ löst.

Die Darstellung einer definierten Verbindung ZnCl$_2$·AN gelingt durch Entfernen von weiterem AN unter stärkerem Erwärmen. Sie ist in CH$_2$Cl$_2$ jedoch vollkommen unlöslich und daher für eine Polymerisation in diesem Lösungsmittel unbrauchbar.

## Herstellung des ZnCl$_2$·Et$_2$O·AN-Komplexes

Dieser ternäre Komplex wird in Lösung durch Vermischen einer bestimmten Menge destilliertem AN mit der entsprechenden Menge einer beispielsweise 2,2 molaren Lösung des Zinkchlorid-Diethylether-Komplexes in CH$_2$Cl$_2$ hergestellt.

## Copolymerisation

Die Copolymerisation wird in den Beispielen in einem Druckreaktor mit Kühlt- bzw. Heizmantel, der auf etwa 10 bis 15 bar ausgelegt und mit einem Rührer ausgerüstet ist, durchgeführt. Dichlormethan wird generell als Lösungsmittel verwendet. In den Beispielen mit Propylen (PR) als Olefincomonomer wird das Reaktor-Druckgefäß zunächst mit dem Initiator (Benzoylperoxid oder Cyclohexylperoxocarbonat) und sofort darauf mit ZnCl$_2$ und dem Lösungsmittel oder mit einer der oben beschriebenen Komplexlösungen beschickt. Unter Inertgas kühlt man anschließend den Inhalt des Reaktionsgefäßes auf -80°C ab. Gleichzeitig wird eine für den Ansatz notwendige Menge Propylen kondensiert und bei ca. -50°C drucklos in den bereits kalten Reaktor überführt. Nach etwa 30 Minuten wird ein Wasser-Thermostat angeschlossen und der Reaktor langsam unter kräftigem Rühren des Reaktionsgutes auf die Endtemperatur erwärmt (ca. 2000 U/min). Vom Erreichen des Maximaldrucks an gilt die Reaktion als gestartet.

In den Beispielen mit Ethylen (ET) als Olefincomonomer wird die Vorbereitung und Komplexzugabe sowie die anschließende Kühlung des Autoklaven wie bei den Propylen-Beispielen beschrieben vorgenommen. Die nötige Menge ET (Sdp. 760: 103,9°C, Dichte bei -145°C = 0,6246 g/ml) wird zunächst in ein Meßgefäß, welches mit flüssigem Stickstoff gekühlt wird, einkondensiert und anschließend in den Reaktor überführt. Nach etwa 30 Minuten Wartezeit wird wie bei den Propylen-Beispielen beschrieben erwärmt.

## Aufarbeitung der Reaktionsprodukte

Nach Ablauf der gewünschten Reaktionszeit wird der Thermostat abgestellt, das Reaktionsgut auf ca. 20°C abgekühlt und die Reaktionsapparatur entspannt. Bei den AN/ET-Ansätzen wird das Reaktionsgemisch mit 1/3 des Gesamtvolumens an Methanol versetzt, während den AN/PR-Ansätzen zusätzlich noch das gleiche Volumen Aceton zugefügt wird, um das ausgefallene komplexierte AN/PR-Copolymer wieder in Lösung zu bringen. Das unlösliche AN/ET-Copolymer wird von überschüssigem "Lösungsmittel" abgetrennt und mit Methanol gewaschen; anschließend wird das Copolymer in Dimethylacetamid gelöst bzw. gequollen und in kaltem Methanol (-78°C) gefällt. Diese "Umfällung" wird zweimal durchgeführt.

Die AN/PR-copolymerhaltige Reaktionslösung wird unter geeigneten Bedingungen ganz von Lösungsmittel (Dichlormethan/Methanol/Aceton) befreit, der Rückstand in reinem Aceton aufgenommen und das Copolymer durch Eingießen in kaltes Methanol (-78°C) ausgefällt; zwecks weiterer Reinigung wird das Präparat nochmals umgefällt. Alle umgefällten Polymere werden mindestens 25 Stunden im Trockenschrank unter vermindertem Druck bei 50°C getrocknet.

Das erfindungsgemäße Verfahren ermöglicht die Copolymerisation von Olefinen, die für sich allein nicht radikalisch polymerisierbar sind. Das Verfahren ist lenkbar, so daß im Idealfall rein streng alternierende Copolymere entstehen. Damit ist es möglich, Copolymere mit hohem Ordnungsgrad zu erzeugen, die sich in ihren Eigenschaften, wie Kristallinität, Glastemperatur, Schmelzverhalten und Dichte von den statistischen Copolymeren unterscheiden. Sie sind deshalb wertvolle Komponenten zum Aufbau von neuartigen Werkstoffen.

## Beispiele

In der nachfolgenden Tabelle 1 sind die Ansatzmengen der Beispiele 1 bis 12 einschließlich der Vergleichsbeispiele 9 und 10 bei der Copolymerisation von Olefinen und Acrylnitril aufgeführt. Es bedeuten

Lösungsvolumen = Menge des Ansatzes
$(AN)_o$ = Mol Acrylnitril/Liter des Lösungsvolumens
AN = Acrylnitril
OL = Olefin
ET = Ethylen
PR = Propylen
CHPC = Cyclohexylperoxicarbonat (Initiator)
DMA = Dimethylacetamid
DMF = Dimethylformamid
DMSO = Dimethylsulfoxid

4

Die Reaktionszeit bei diesen Beispielen betrug 15 Stunden, die Reaktionstemperatur lag bei 40°C.

Tabelle 1

| Beisp. | Olefin Art | Menge ml | mol | AN g | mol | Komplexierungsmittel Art | Menge Mol | CHPC mg | mmol | $CH_2Cl_2$ ml | Lösungsvolumen ml | $(AN)_0$ mol/l | Verhältnis (Kompl.M):(AN) | (OL):(AN) |
|---|---|---|---|---|---|---|---|---|---|---|---|---|---|---|
| 1 | PR | 59,3 | 0,881 | 9,35 | 0,1762 | $ZnCl_2$ | 11,7** 0,0858 | 504 | 1,762 | 80 | 150 | 1,2 | 0,5 | 5 |
| 2 | PR | 60,6 | 0,9 | 9,55 | 0,18 | $ZnCl_2 \cdot Et_2O$* | 81,8 0,18 | 515 | 1,8 | - | 150 | 1,2 | 1 | 5 |
| 3 | PR | wie Beisp. 2 | | | | | | | | | | | 2 | |
| 4 | PR | 25,2 | 0,375 | 3,98 | 0,075 | $ZnCl_2 \cdot Et_2O$ | 136 0,3 | 215 | 0,75 | - | 150 | 0,5 | 4 | 5 |
| 5 | ET | 36,4 | 0,818 | 17,8 | 0,27 | $ZnCl_2 \cdot Et_2O$ | 61,4 0,135 | 773 | 2,7 | 30 | 150 | 1,8 | 0,5 | 3 |
| 6 | ET | 24,2 | 0,54 | 9,55 | 0,18 | $ZnCl_2 \cdot Et_2O$ | 81,8 0,18 | 515 | 1,8 | 32 | 150 | 1,2 | 1 | 3 |
| 7 | ET | 10,1 | 0,225 | 3,98 | 0,075 | $ZnCl_2 \cdot Et_2O$ | 136 0,3 | 215 | 0,75 | - | 150 | 0,5 | 4 | 3 |
| 8 | ET | 6 | 0,135 | 2,39 | 0,045 | $ZnCl_2 \cdot Et_2O$ | 123 0,27 | 129 | 0,45 | 18 | 150 | 0,3 | 6 | 3 |
| 9V | PR | 47 | 0,7 | 7,24 | 0,14 | - | - | 400 | 1,4 | 54 | 110 | 1,24 | - | 5 |
| 10V | ET | 12,1 | 0,27 | 4,78 | 0,09 | - | - | 257 | 0,9 | 81 | 100 | 0,9 | - | - |
| 11*** | PR | 54,1 | 0,81 | 8,53 | 0,161 | $ZnCl_2 \cdot Et_2O$ | 73,2 0,161 | 460 | 1,61 | - | 135 | 1,2 | 1 | 5 |
| 12*** | PR | 42,1 | 0,625 | 6,63 | 0,125 | $ZnCl_2 \cdot Et_2O$ | 56,8 0,125 | 357 | 1,25 | - | 104 | 1,2 | 1 | 5 |

* Lösung 2,2 molar, Menge in ml in $CH_2Cl_2$
** in g
*** mit zurückgewonnenem Komplexierungsmittel

| Charakterisierung der nach Beispielen 1 - 9 erhaltenen Copolymerisate: | | | | | | |
|---|---|---|---|---|---|---|
| Bsp. | Umsatz[a] (%) | $M_W$[b] | $M_n$[b] | Tg/K[c] | Löslich in: | Einbauverhältnis AN/Olefin[d] |
| 1 | 31,6 | 110.000 | 20.000 | 328 | Aceton, DMA, DMF, DMSO | 1,5 : 1 |
| 2 | 67,0 | 55.700 | 9.500 | 322 | Aceton, DMA, DMF | 1,4 : 1 |
| 3 | 80,0 | 252.000 | 41.700 | 330 | Aceton, DMA, DMF | 1,2 :1 |
| 4 | 76,8 | 161.000 | 40.000 | 327 | Aceton, $CH_2Cl_2$ DMF, DMA | 1,1 : 1 |
| 5 | 49,8 | 40.600 | 22.000 | 329 | DMA, DMF, DMSO | 2,4 : 1 |
| 6 | 52,8 | 279.000 | 26.300 | 331 | DMA, DMF, DMSO | 1,8 : 1 |
| 7 | 36,2 | 94.000 | 11.200 | 315 | DMA, DMF, DMSO fast völlig in Aceton | 1,2 : 1 [e] |
| 8 | 10,1 | 44.500 | 4.100 | 331 | DMA, DMF, DMSO fast völlig in Aceton | 1,4 : 1 [e] |
| 9 V | 4,5 | 16.000 | 7.800 | 324 | DMA, DMF, $CHCl_3$ fast völlig | 1,9 : 1 |
| 10V | 3,0 | - | - | - | DMA, DMSO | 20 : 1 |
| 11 | 20,0 | 44.300 | 22.800 | 323 | Aceton, DMA, DMF | 1,4 : 1 |
| 12 | 49,6 | 38.300 | 20.000 | 324 | Aceton, DMA, DMF | 1,4 : 1 |

a) bezogen auf $(AN)_o$
b) GPG in DMA bei 70°C; Styragel-Säulensatz; Polystyrol-Standard; $M_n$-Werte wegen schwieriger Basis-linienkorrektur mit großen Fehlern behaftet.
c) DSC, 2. Heizcyklus, 20 K/min
d) $^1$H-NMR-Analyse
e) bimodal

Die AN/PR-Copolymerisate der Beispiele 2 und 3 bestehen bis zu 50 % aus $CHCl_3$-löslichen Anteilen. Nach 15-stündigem Extrahieren mit $CHCl_3$ ergaben sich 43,2 Gew.-% extrahierbarer, $CHCl_3$-löslicher Anteil mit folgenden charakteristischen Daten:

$M_w$ = 11.000 $M_n$ = 4.400; $T_g$ = 325 K (Extraktionsrückstand: $T_g$ = 332 K)

Einbauverhältnis (laut $^1$H-NMR): AN/PR = 1:1 (Extraktionsrückstand: 1,7:1)

Laut $^{13}$C-NMR-Analyse besteht der extrahierbare Anteil zu 100% aus alternierenden Copolymeren.

**Beispiel 13**

Copolymerisation von AN und PR mit $ZnCl_2 \cdot Et_2O$ als Komplexierungsmittel

| Lösungsvolumen: | 150 ml |
|---|---|
| $(AN)_o$ | 0,3 mol/l |
| $ZnCl_2 \cdot Et_2O$ | 123 ml 2,2m $CH_2Cl_2$Lsg. = 0,27 mol |
| AN: | 2,96 ml = 0,045 mol |
| PR: | 15,2 ml = 0,225 mol |
| CHPC: | 129 mg = 0,45 mmol |
| $(ZnCl_2 \cdot Et_2O):(AN)= 6$; $(PR):(AN)= 5$; $T= 40°C$; Reaktionszeit: 15h | |

Nach Ablauf der Reaktionszeit wurde auf ca. 20°C abgekühlt und entspannt. Durch den Tubus wurden unter leichtem Rühren zunächst 100 ml Aceton und anschließend soviel Methanol zugegeben (etwa 50-60 ml), bis der Ansatz homogen geworden war. Die Lösung wurde in einen 1-l-Kolben überführt, das Druckgefäß noch zweimal mit Aceton ausgespült, und die vereinigten Lösungen wurden eingeengt. Der gelblichtransparente zähe Rückstand wurde in etwa der 10-fachen Menge Aceton aufgenommen, unter leichtem Überdruck filtriert und unmittelbar darauf in 1,5 l kaltes (-78°C), stark gerührtes Methanol eingetropft. Das ausgefallene weiße Copolymer wurde abgesaugt, mit kaltem Methanol und Diethylether je einmal gewaschen und anschließend im Trockenschrank bei 50°C unter vermindertem Druck getrocknet; zur weiteren Reinigung löste man das trockene Polymer in der 10-fachen Menge Aceton und verfuhr beim Umfällen wie oben beschrieben. Ausbeute: 2,10 g = 49,1% bzgl. AN; das Produkt ist vollständig in $CHCl_3$ löslich.
$M_w = 78.500$, $M_n = 26.000$; bimodal
$T_g = 326$ K
Einbauverhältnis: AN/PR = 1:1
Zur Rückgewinnung und quantitativen Bestimmung des $ZnCl_2$ im methanolischen Filtrat nach Abtrennung des Polymers wurde wie folgt vorgegangen: Filtrat und Waschlösungen der ersten Fällung wurden gemeinsam eingeengt, die hinterbleibende zähe, bräunliche Masse in eine Porzellanschale überführt und danach vollständig zur Trockene eingedampft. Anschließend wurde der Rückstand noch 15 Minuten lang vorsichtig auf 300-400°C erhitzt, um organische Anteile zu zersetzen. Die Auswaage des Schmelzkuchens betrug 37,8 g; anhand der eingesetzten 2,2-molaren $ZnCl_2 \cdot Et_2O$-$CH_2Cl_2$-Lösung enthielt der Reaktionsansatz 36,78 g $ZnCl_2$, d.h. die Rückgewinnung ist praktisch vollständig. Nach dem Abkühlen wurde der Schmelzkuchen mit etwa 200 ml heißem Wasser ausgelaugt, die wäßrige Lösung filtriert und das klare, leicht gelbliche Filtrat mit destilliertem Wasser auf 1 Liter aufgefüllt (T= 20°C).
Zur quantitativen $Zn^{2+}$-Bestimmung wurden dem Ansatz zwei 10-ml Proben entnommen, mit je 50 ml destilliertem Wasser verdünnt und mit je 10 ml Ammoniak-Lösung (25%ig) alkalisch gemacht. Mit einer 0,1 m-EDTA-Lösung wurde $Zn^{2+}$ unter Zuhilfenahme von Merck-Indikator-Puffertabletten in der Siedehitze titriert; maßgebend ist der Farbumschlag von schmutzig-rot nach grün.
Der Verbrauch an 0,1m EDTA-Lösung (f= 1,0208) betrug 26,8 ml bzw. 26,9 ml, was bei einem Mittelwert von 26,85 ml einer Konzentration von 0,3735 g $ZnCl_2$ in der entnommenen Probelösung entspricht. In einem Liter der Lösung waren demnach 37,35 g $ZnCl_2$ gelöst, entsprechend 98,8 % der Schmelzkuchenauswaage.
In dem Filtrat der Umfällung wurden titrimetrisch nur 5,2 mg $ZnCl_2$ nachgewiesen.
Das zurückgewonnene $ZnCl_2$ wurde als Etherkomplex für die Beispiele 11 und 12 verwendet.

**Beispiel 14**

Copolymerisation von AN and PR mit $ZnCl_2$ als Komplexierungsmittel

| Lösungsvolumen: | 130 ml |
|---|---|
| $(AN)_o$: | 1,3 mol/l |
| $ZnCl_2$: | 11,61 g = 0,0852 mol |
| PR: | 57,3 ml = 0,855 mol |
| AN: | 9,07 g = 0,1709 mol |
| BPO: | 414 mg = 1,709 mmol |
| $CH_2Cl_2$: | 60 ml |
| $(ZnCl_2)$:(AN)= 0,5; (PR):(AN)= 5; T= 60°C, Reaktionszeit: 14h | |

Nach 14 Stunden Reaktionszeit wurde der Ansatz auf ca. 20°C abgekühlt und entspannt. Durch den Tubus wurden etwa 50 ml Methanol zwecks Solvolyse des komplexierten Polymers zugegeben und durch weitere Zugabe von wenig (20-30 ml) Aceton erhielt man eine homogene Lösung. Danach wurde der Inhalt des Reaktionsgefäßtes in einen 500 ml-Kolben überführt und eingeengt. Der hochviskose, gelblich transparente Rückstand wurde in der 10-fachen Menge Aceton aufgenommen, die Lösung druckfiltriert und hieraus direkt in 1,5 l kaltes (-78°C), stark gerührtes Methanol eingetropft. Das ausgefallene Copolymer (weißes Produkt) wurde abgesaugt, mit kaltem Methanol sowie Diethylether je einmal gewaschen und danach getrocknet. Zwecks weiterer Reinigung wurde dieses in der 10-fachen Menge Aceton gelöst und wie oben beschrieben in Methanol ausgefällt.

Ausbeute: 3,16 g = 19,4 % bzgl. AN
Mw= 225.000, $M_n$= 16.000, bimodal
$T_g$= 340 K
Einbauverhältnis: AN/Pr= 1,5:1
Das Filtrat der ersten Fällung und die Waschlösung wurde zur $ZnCl_2$-Rückgewinnung herangezogen. Das Lösungsmittel wurde durch Verdampfung entfernt und das Wasser aus dem sirupösen, farblosen Rückstand vorsichtig abgetrieben. Es entstand eine weißliche Masse, die sich jedoch durch organische Verunreinigungen gegebenenfalls rasch braun verfärbte. Durch Erwärmung auf 300-400°C während 15 Minuten wurde schließlich vollständig entwässert und 12,2 g eines Schmelzkuchens erhalten, der überwiegend aus $ZnCl_2$ bestand.

Dieser Schmelzkuchen wurde in etwa 200 ml heißem Wasser aufgenommen, die Lösung durch Filtration von unlöslichen Anteilen befreit und das klare Filtrat mit destillierten Wasser auf 1 l aufgefüllt (T= 20°C).

Zur quantitativen Bestimmung wurden jeweils 20 ml entnommen, mit 20 ml 5%iger Ammoniaklösung alkalisch gemacht und in der Wärme mit 0,1m EDTA-Lösung titriert. Bei Verwendung von Merck-Indikatortabletten ist der Farbumschlag von schmutzig-rot nach grün maßgebend.

Der Verbrauch an 0,1 m EDTA-Lösung (F= 0,9995) war 14,5 ml bzw. 14,55 ml, was bei einem Mittelwert von 14,525 ml einer Konzentration von 94,9 mg $Zn^{2+}$ in der entnommenen Probelösung (20 ml) entspricht. Insgesamt waren in 1 l Lösung demnach 9,89 g $ZnCl_2$ enthalten, was 85,2 % des als Diethyletherkomplexes eingesetzten $ZnCl_2$ entspricht (81,1 % der Schmelzkuchenauswaage).

**Patentansprüche**

1.  Verfahren zur Herstellung von alternierenden Copolymeren durch radikalische Copolymerisation von Acrylnitril mit Olefinen, dadurch gekennzeichnet, daß die Copolymerisation in Gegenwart von einem Zinksalz als Komplexierungsmittel in einem organischen Lösungsmittel durchgeführt wird und das Einbauverhältnis von Acrylnitril zu Olefin im Bereich 1:1 bis 2,5:1 liegt.

2.  Verfahren nach Anspruch 1, dadurch gekennzeichnet, daß als Zinksalz Zinkhalogenide verwendet werden.

3.  Verfahren nach Anspruch 1 oder 2, dadurch gekennzeichnet, daß Acrylnitril eingesetzt wird in einem molekularen Verhältnis von Komplexierungsmittel zu Acrylnitril von 0,5:1 bis 6:1.

4. Verfahren nach einem oder mehreren der Ansprüche 1 bis 3, dadurch gekennzeichnet, daß als Olefine α-Olefine vorzugsweise Ethylen und/oder Propylen eingesetzt werden.

5. Verfahren nach einem oder mehreren der Ansprüche 1 bis 4, dadurch gekennzeichnet, daß als Komplexierungsmittel Zinkchlorid (ZnCl$_2$) vorzugsweise in der Form der Komplexe ZnCl$_2$·Et$_2$O, ZnCl$_2$·Et$_2$O·AN, ZnCl$_2$·AN und/oder ZnCl$_2$·2 AN eingesetzt wird.

6. Verfahren nach einem oder mehreren der Ansprüche 1 bis 5, dadurch gekennzeichnet, daß die Copolymerisation in Dichlormethan durchgeführt wird.

7. Verfahren nach einem oder mehreren der Ansprüche 1 bis 6, dadurch gekennzeichnet, daß das Komplexierungsmittel in zurückgewonnener Form eingesetzt wird.

8. Verfahren nach einem oder mehreren der Ansprüche 1 bis 7, dadurch gekennzeichnet, daß das molekulare Verhältnis Olefin (OL) zu Acrylnitril (AN)

$$OL:AN = 0,5:1 \text{ bis } 10:1$$

beträgt.

9. Verfahren nach einem oder mehreren der Ansprüche 1 bis 8, dadurch gekennzeichnet, daß die Copolymerisation bei einer Temperatur von -78°C bis + 100°C durchgeführt wird.

10. Verfahren nach einem oder mehreren der Ansprüche 1 bis 9, dadurch gekennzeichnet, daß als radikalische Polymerisationsinitiatoren Perester, Dialkylperoxide, Hydroperoxide oder Sauerstoff eingesetzt werden.

11. Verfahren nach Anspruch 10, dadurch gekennzeichnet, daß Cyclohexylperoxicarbonat als Initiator eingesetzt wird.

## Claims

1. A process for preparing alternating copolymers by free-radical copolymerization of acrylonitrile with olefins, which comprises carrying out the copolymerization in the presence of a zinc salt as complexing agent in an organic solvent and wherein the ratio of incorporation of acrylonitrile to olefin is in the range of 1:1 to 2.5:1.

2. The process as claimed in claim 1, wherein the zinc salt used is a zinc halide.

3. The process as claimed in claim 1 or 2, wherein acrylonitrile is used in a molecular ratio of complexing agent to acrylonitrile of 0.5:1 to 6:1.

4. The process as claimed in one or more of claims 1 to 3, wherein α-olefins, preferably ethylene and/or propylene, are used as olefins.

5. The process as claimed in one or more of claims 1 to 4, wherein zinc chloride (ZnCl$_2$) is used as the complexing agent preferably in the form of the complexes ZnCl$_2$×Et$_2$O, ZnCl$_2$×Et$_2$O×AN, ZnCl$_2$×AN and/or ZnCl$_2$×2AN.

6. The process as claimed in one or more of claims 1 to 5, wherein the copolymerization is carried out in dichloromethane.

7. The process as claimed in one or more of claims 1 to 6, wherein the complexing agent is used in recovered form.

8. The process as claimed in one or more of claims 1 to 7, wherein the molecular ratio of olefin (OL) to acrylonitrile (AN) is

$$OL:AN = 0.5:1 \text{ to } 10:1.$$

9. The process as claimed in one or more of claims 1 to 8, wherein the copolymerization is carried out at a temperature of -78°C to +100°C.

**10.** The process as claimed in one or more of claims 1 to 9, wherein peresters, dialkyl peroxides, hydroperoxides or oxygen are used as free-radical polymerization initiators.

**11.** The process as claimed in claim 10, wherein cyclohexyl peroxycarbonate is used as the initiator.

## Revendications

**1.** Procédé de préparation de copolymères alternés par copolymérisation radicalaire d'acrylonitrile avec des oléfines, caractérisé en ce que l'on effectue la copolymérisation dans un solvant organique en présence d'un sel de zinc en tant qu'agent complexant, et en ce que le rapport d'unités structurales acrylonitrile : oléfine est compris entre 1:1 et 2,5:1.

**2.** Procédé selon la revendication 1, caractérisé en ce que l'on utilise des halogénures de zinc comme sels de zinc.

**3.** Procédé selon la revendication 1 ou 2, caractérisé en ce que l'on utilise l'acrylonitrile en un rapport molaire de l'agent complexant à l'acrylonitrile de 0,5:1 à 6:1.

**4.** Procédé selon l'une ou plusieurs des revendications 1 à 3, caractérisé en ce que l'on utilise comme oléfines des $\alpha$-oléfines, de préférence l'éthylène et/ou le propylène.

**5.** Procédé selon l'une ou plusieurs des revendications 1 à 4, caractérisé en ce que l'on utilise comme agent complexant du chlorure de zinc ($ZnCl_2$), de préférence sous forme des complexes $ZnCl_2 \cdot Et_2O$, $ZnCl_2 \cdot Et_2O \cdot AN$, $ZnCl_2 \cdot AN$ et/ou $ZnCl_2 \cdot 2AN$.

**6.** Procédé selon l'une ou plusieurs des revendications 1 à 5, caractérisé en ce que la copolymérisation s'effectue dans du dichlorométhane.

**7.** Procédé selon l'une ou plusieurs des revendications 1 à 6, caractérisé en ce que l'on utilise l'agent complexant sous une forme récupérée.

**8.** Procédé selon l'une ou plusieurs des revendications 1 à 7, caractérisé en ce que le rapport molaire de l'oléfine (OL) à l'acrylonitrile (AN) est OL:AN = 0,5:1 à 10:1.

**9.** Procédé selon l'une ou plusieurs des revendications 1 à 8, caractérisé en ce que la copolymérisation s'effectue à une température de -78°C à +100°C.

**10.** Procédé selon l'une ou plusieurs des revendications 1 à 9, caractérisé en ce que l'on utilise comme amorceurs de la polymérisation radicalaire des peresters, des peroxydes de dialkyle, des hydroperoxydes ou de l'oxygène.

**11.** Procédé selon la revendication 10, caractérisé en ce que en ce que l'on utilise du peroxycarbonate de cyclohexyle comme amorceur.